# EUROPEAN PATENT APPLICATION

(11) **EP 1 375 439 A1**
(43) Date of publication of application: **02.01.2004**
(21) Application number: 03013709.5
(22) Date of filing: 17.06.2003
(51) Int. Cl.: C02F 9/00

(54) **Liquid treatment method and apparatus**

(30) Priority: 18.06.2002 JP 2002177509
(71) Applicant: CANON KABUSHIKI KAISHA, Ohta-ku, Tokyo (JP)
(72) Inventor: Hosaka, Akihito, Ohta-ku, Tokyo (JP); Akino, Shoji, Ohta-ku, Tokyo (JP); Otsuka, Hiroshi, Ohta-ku, Tokyo (JP)
(74) Representative: Weser, Wolfgang, Dr. Dipl.-Phys.

(57) **Abstract**

A liquid treatment method for removing impurities from an impurity-containing liquid comprises a collection step of collecting a precipitated solid component from an impurity-containing liquid in a tank containing the liquid along with a liquid component of the liquid, a separation step of separating the solid component collected in the collection step from the liquid component collected in the collection step, a return step of returning to the tank the liquid component separated from the solid component in the separation step, and a purification step of obtaining a purified liquid from the impurity-containing liquid contained in the tank. A liquid treatment apparatus for removing impurities from an impurity-containing liquid comprises the tank, a collection means for collecting the solid component along with the liquid component, a separation means for separating the solid component collected by the collection means from the liquid components collected by the collection means, a return means for returning to the tank the liquid component separated from the solid component by the separation means, and a purification means for obtaining a purified liquid from the impurity-containing liquid contained in the tank.

## Description

### BACKGROUND OF THE INVENTION

### Field of the Invention

The present invention relates to a liquid treatment method and apparatus which can reduce the amount of liquid component collected together with a solid component when the solid component is collected from an impurity-containing liquid and which can obtain, from the impurity-containing liquid, a large amount of purified liquid capable of being reused or discharged to the outside of a system because of containing impurity components at a very low concentration. The present invention also relates to an effluent treatment method and apparatus dealing with an effluent generated from a production process such as polishing and cleaning in the industrial field as well as an effluent generated from a variety of situations such as laundry and dish washing in ordinary households or waste disposal in companies. Related Background Art

An effluent generated from a production process contains various kinds of impurities. An effluent treatment is carried out according to regulations and regional situations for each concerned impurity. The purpose of the effluent treatment is to remove impurities in water. SS (Suspended Solid) components also referred to as suspended matters, heavy metal components such as lead and cadmium, ion components such as calcium and soluble organic compounds such as organic solvents and surfactants are typical objects to be removed. Through the effluent treatment process, the treated effluent is used again in the production process, or the treated effluent satisfying effluent quality standards is discharged into rivers and the like.

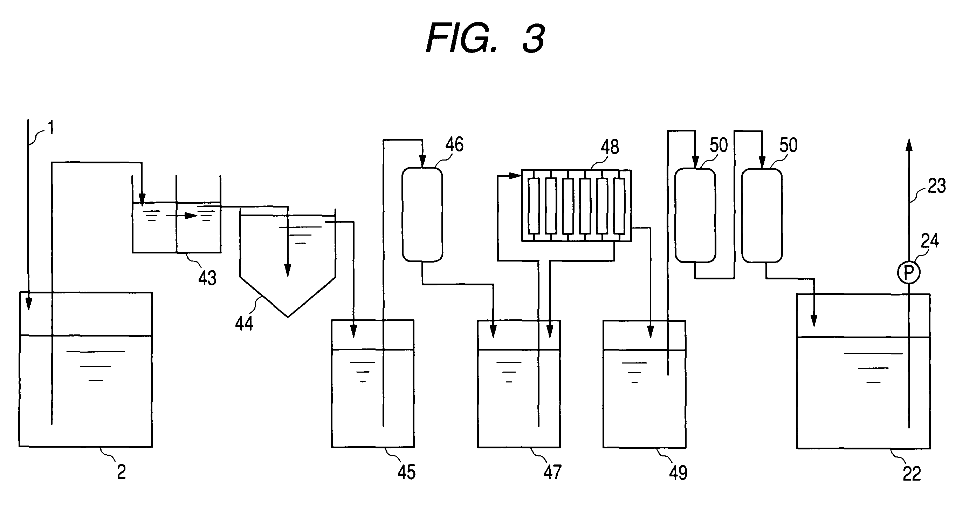

A general effluent treatment is comprised of a large number of steps, and a treatment step is provided for each type of treatment object. The effluent treatment process will be described below using as an example the effluent treatment of an effluent as a result of cleaning generated from an optical glass process shown in FIG. 3. In this specification, the term "raw effluent" refers to an effluent to be treated just before flowing into an effluent treatment apparatus system.

In FIG. 3, reference numeral 1 denotes a process effluent inflow pipe, reference numeral 2 denotes a raw effluent tank, reference numeral 43 denotes a aggregation neutralization tank, reference numeral 44 denotes a precipitating tank, reference numeral 45 denotes a relay tank 1, reference numeral 46 denotes a fast sand filtration tower, reference numeral 47 denotes a relay tank 2, reference numeral 48 denotes an ultrafiltration membrane, reference numeral 49 denotes a relay tank 3, reference numeral 50 denotes an activated carbon tower, reference numeral 22 denotes a treated effluent tank, reference numeral 23 denotes a treated effluent supplying pipe and reference numeral 24 denotes a treated effluent supplying pimp.

The effluent from cleaning in optical glass processing contains as an effluent treatment object an abrasive material, glass cutting chips and cutting oil brought from an optical glass polishing process, detergent components such as a hydrocarbon based detergent, a surfactant and a builder and the like. A general treatment method for an effluent containing these components comprises removing SS components such as an abrasive material by aggregation in the aggregation neutralization tank 43, precipitation in the precipitating tank 44 and sand filtration in the rapid sand filtration tower 46, then removing fine particle components by the ultrafiltration membrane 48, then adsorbing and removing organic components such as a hydrocarbon based detergent, cutting oil and a surfactant by the activated carbon tower 50 or biological filtration (not shown) applied as necessary, and then removing, as occasion demands, ion components by an ion exchange resin, reverse osmosis membrane or the like. Impurities are removed from the effluent through these effluent treatment steps.

In this conventional effluent treatment method, however, since a different treatment step is required for each type of object to be removed, the entire treatment steps becomes too long, and accordingly the effluent treatment process is complicated and the effluent treatment apparatus is upsized. In the optical glass processing process described above, for example, effluent treatment steps of removing SS components, soluble organic materials, soluble trace heavy and so forth metals by aggregation precipitation, sand filtration, ultrafiltration, activated carbon tower, ion exchange, the reverse osmosis membrane or the like are essential, and thus there are limitations on the reduction of treatment steps and the scaledown of apparatus. However, from the viewpoint of production costs, production stability, energy-saving, apparatus maintainability and the like, it is desirable that the treatment object can be removed efficiently with a minimum possible number of effluent treatment steps.

In recent years, as a method for enhancement of efficiency of these effluent treatment steps, the method in which a filtration membrane is placed in a membrane-immersed tank has been devised so as to treat water with not only the function of aggregation and sand filtration but also the function of precision filtration in one step, and become commercially practical in a domestic effluent treatment in water-works, purification tanks and the like. The method is already described in Japanese Patent Application Laid-Open No. 5-277480 (patent document 1), Japanese Patent Application Laid-Open No. 7-232192 (patent document 2) and Japanese Patent Application Laid-Open No. 7-299492 (patent document 3).

In the patent document 3, an effluent to be treated flowing from an inlet has contaminants precipitated away in the precipitating separation tank and is simultaneously subjected to an anaerobic treatment to undergo aerobic decomposition. Thereafter, the effluent is subjected to filtration under reduced pressure, and the treated effluent is discharged to the outside while the effluent to be treated is sent back. In this method, however, the treated effluent is discharged to the outside. Moreover, in this document, reuse of water contained in contaminants is not mentioned at all.

In the case where the above method is applied to the treatment of the effluent containing additives such as inorganic material and aggregating agents, like an industrial effluent generated from the optical glass process and the like, inorganic sludge such as abrasive materials, aggregating agents and the like accumulated in the membrane-immersed tank should be removed from the tank, and the inventor has paid attention to the fact that a large amount of water is consumed as the above solid materials are removed. Specifically, the amount of liquid components removed from the membrane-immersed tank as the above solid materials are removed accounts for about 30% of the amount of liquid components introduced into a treatment system, i.e. the membrane-immersed tank. The inventor has thought that the amount of liquid components consumed in this way should be reduced. This is because the discharge of the high rate of liquid components, i.e. about 30% directly to the outside of the system along with solid components such as sludge results in a significant loss for liquid components themselves. Furthermore, liquid components may be discharged to the outside of the system without sufficiently collecting impurities soluble in liquid components.

If the high rate of liquid components, i.e. 30%, can be purified into a purified liquid, almost 100% of purified liquid will be reused. In the conventional technique, reuse in such a high rate is impossible, and at most 70% of liquid components are reused. In this case, a virgin liquid must be added depending on the purpose for which the liquid is reused.

The object of the present invention is to provide a liquid treatment method and a liquid treatment apparatus for removing impurities from a liquid containing impurities (hereinafter referred to as "impurity-containing liquid") in which the amount of liquid components is reduced that are discharged to the outside of a system along with solid components when the solid components are collected from the impurity-containing liquid such as the effluent described above.

More specifically, the present invention provides a liquid treatment method and apparatus, specifically an effluent treatment method and apparatus allowing enhancement of the efficiency of sludge condensation and removal of trace heavy metals such as lead, and making it possible to enhance the efficiency of steps of treating the effluent discharged in complicated industrial fields such as an optical glass process. According to the present invention, the amount of consumption of liquid components in the impurity-containing liquid can be reduced to a minimum in the treatment of the domestic effluent and the industrial effluent in the optical glass process and the like.

### SUMMARY OF THE INVENTION

According to an aspect of the present invention there is provided a liquid treatment method for removing impurities from an impurity-containing liquid, comprising:
a collection step of collecting a precipitated solid component from an impurity-containing liquid in a tank containing the liquid along with a liquid component of the liquid;
a separation step of separating the solid component collected in the collection step from the liquid component collected in the collection step;
a return step of returning to the tank the liquid component separated from the solid component in the separation step; and
a purification step of obtaining a purified liquid from the impurity-containing liquid contained in the tank.

The impurity-containing liquid may be a liquid containing a aggregating agent and/or a pH adjustor.

The method of the present invention may further comprises a step of removing the liquid component from the solid component separated in the separation step (hereinafter also referred to as "dehydration step"), and a post-dehydration return step of returning to the purification step the liquid components obtained by the dehydration.

The purification step may be a step of filtering the impurity-containing liquid to remove impurities therefrom.

The purification step may comprise a step of supplying air to the impurity-containing liquid (hereinafter also referred to as "aeration step") to make the impurity-containing liquid contact the air.

The liquid treatment method may further comprise a step of introducing activated carbon into the impurity-containing liquid (hereinafter also referred to as "activated carbon adding step") to adsorb an organic material or metal on activated carbon and remove the adsorbed organic material or metal.

The liquid treatment method of the present invention may further comprise a step of adding sodium hypochlorine to the purified liquid (hereinafter also referred to as "sodium hypochlorine adding step").

According to another aspect of the present invention, there is provided a liquid treatment apparatus for removing impurities from an impurity-containing liquid, comprising:
a tank containing an impurity-containing liquid;
a collection means for collecting a solid component precipitated in the tank along with a liquid component of the impurity-containing liquid;
a separation means for separating the solid component collected by the collection means from the liquid components collected by the collection means;
a return means for returning to the tank the liquid component separated from the solid component by the separation means; and
a purification means for obtaining a purified liquid from the impurity-containing liquid contained in the tank.

The above tank may have a cylindrical shape with a lower end comprising an inclined plane.

The apparatus of the present invention may comprise a means for supplying air to the impurity-containing liquid to make the impurity-containing liquid contact the air.

The apparatus of the present invention may comprise an activated carbon adding means for supplying into the impurity-containing liquid activated carbon for adsorbing an organic material or metal in the impurity-containing liquid on the activated carbon and removing the adsorbed organic material or metal.

The apparatus of the present invention may comprise an aggregating agent adding means for adding an aggregating agent for aggregating a metal or a suspended material in the impurity-containing liquid.

### BRIEF DESCRIPTION OF THE DRAWINGS

FIG. 1 is a schematic diagram of an effluent treatment apparatus in the embodiment of the present invention;
FIG. 2 is a schematic diagram showing one example of a structure for preventing accumulation of sludge in a membrane-immersed tank in the present invention; and
FIG. 3 is a schematic diagram of an effluent treatment apparatus in a lens processing process.

### DETAILED DESCRIPTION OF THE PREFERRED EMBODIMENTS

The present embodiment will be described in detail below using an embodiment as an example. Throughout the drawings, like reference symbols are used for like parts.

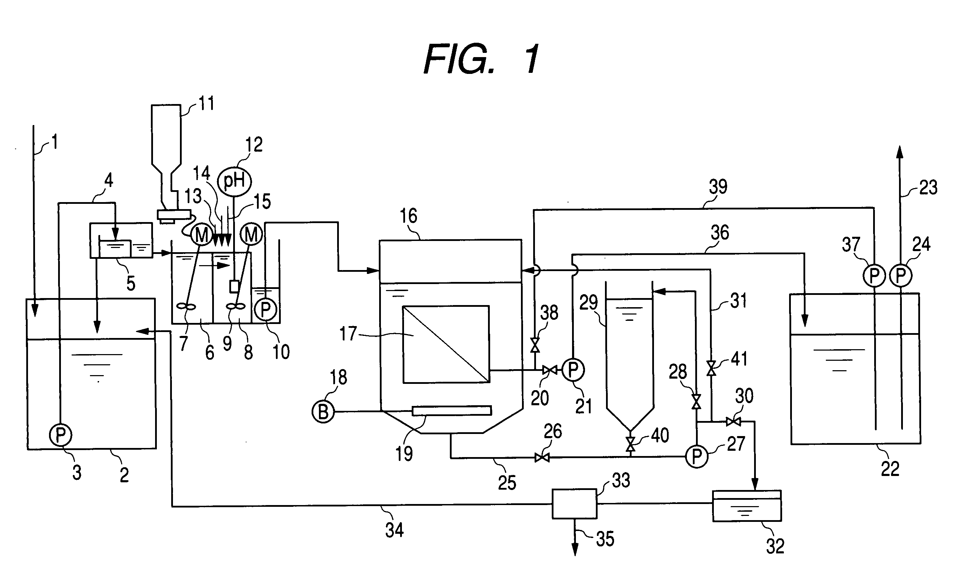

FIG. 1 schematically shows one example of an effluent treatment apparatus according to the present invention. In this embodiment, a solid component comprises impurity to be removed. A raw effluent which is an impurity-containing liquid from a pre-process such as an optical glass polishing process (not shown) is supplied to a raw effluent tank 2 via a process effluent inflow pipe 1. The raw effluent is pumped by a raw effluent pump 3, passed through a raw effluent supply pipe 4 and adjusted in a raw effluent measuring tank 5 so that it flows at a rate suitable for a treatment. As a activated carbon introduction step of the present invention, the adjusted raw effluent is supplied with powdered activated carbon from a powdered activated carbon supplying apparatus 11 in a first mixing tank 6 and mixed therewith uniformly by a first mixing tank stirrer 7. Thereafter, the raw effluent is passed to a second mixing tank 8 and stirred uniformly by a second mixing tank stirrer 9 together with an aggregating agent supplied through a aggregating agent supply line 13. For the aggregating agent, inorganic aggregating agents such as polychlorinated aluminum, aluminum sulfate, ferric oxide or ferrous oxide, and organic aggregating agents such as nonionic polymer aggregating agents, anionic polymer aggregating agents and cationic polymer aggregating agents are used alone or in combination depending on the quality of the effluent. Furthermore, in the second mixing tank 8, the raw effluent is adjusted to have pH most suitable for aggregation of the aggregating agent using an alkali supplied through a neutralizing alkali supply line 14, a neutralizing acid supplied through a neutralizing acid supply line 15 and a pH indicating and controlling device 12. The neutralizing alkali includes a sodium hydroxide aqueous solution, a calcium hydroxide aqueous solution and the like, and they are used alone or in combination. The neutralizing acid includes sulfuric acid, hydrochloric acid and the like, and they are used alone or in combination.

The effluent mixed with powdered activated carbon and the aggregating agent and adjusted to have pH most suitable for aggregation is supplied by a raw effluent transferring pump 10 to a membrane-immersed tank 16 as a tank containing the impurity-containing liquid. In this embodiment, the effluent containing impurities, supplied to the membrane-immersed tank 16, is hereinafter referred to "effluent to be treated". An air diffusing pipe 19 for aeration is placed in the lower part of the membrane-immersed tank 16. The air diffusing pipe is supplied with air by an aerating blower 18 to mix with air the effluent to be treated contained in the membrane-immersed tank 16. the air-mixing as an aeration step of the present invention is carried out as an air source for an aerobic biological treatment applied as necessary demands to the effluent to be treated, or for the purpose of preventing a deposition of sludge on a ceramic filtration membrane 17 described later.

In the present invention, a collection step of having an impurity-containing liquid such as the effluent to be treated contained in a tank and collecting solid components precipitated therein along with liquid components is provided. In this embodiment, in the membrane-immersed tank 16 as the tank to contain the liquid, organic materials are decomposed by microorganisms through an aerobic biological treatment, organic materials and soluble trace heavy metals such as lead are adsorbed away by powdered activated carbon, and heavy metals such as lead, cadmium and arsenic and SS components such as an abrasive material are aggregated by a aggregating agent. Particularly, powdered activated carbon is retained in the membrane-immersed tank 16, thereby making it possible to achieve the removal of soluble trace heavy metals such as lead, which could be impossible with a usual aggregation and precipitation treatment, to reduce their concentration to a low level such that the liquid components subjected to the treatment contain almost no soluble trace heavy metals.

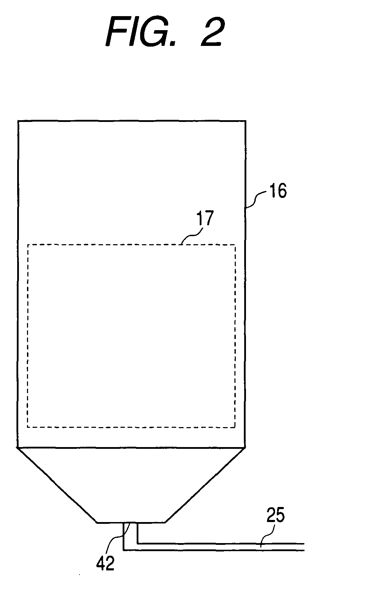

Solid components are precipitated from the effluent to be treated while the effluent to be treated is contained in the membrane-immersed tank 16 The solid components include solid components originally contained in the raw effluent such as SS components originating from a pre-process, components insolubilized or aggregated from the effluent to be treated in the membrane-immersed tank, powdered activated carbon added in the first mixing tank 6, and a aggregating agent added in the second mixing tank 8. The SS components originating from a pre-process are easily solidified and accumulated on the bottom of the membrane-immersed tank 16, and therefore the lower end of the membrane-immersed tank 16 preferably has a shape having an inclined wall face, specifically an inverted cone, inversed conic trapezoid, inversed polygonal cone or inversed polygonal conic trapezoid. With the lower end having such a shape, the solid components including SS components can be concentrated on a narrow area and conveniently discharged to the outside of the tank as an aggregated system of a solid/liquid dispersed system without retaining the solid components on the bottom of the membrane-immersed tank. In this embodiment, the bottom part of the membrane-immersed tank 16 is processed into an inversed conic trapezoid as shown in FIGS. 1 and 2. Reference numeral 42 denotes a sludge drain port provided on the bottom of the membrane-immersed tank 16. By providing such a configuration, SS components can be prevented from being accumulated and retained on the bottom of the membrane-immersed tank 16 to drain sludge efficiently from the sludge drain port 42.

In this embodiment, as a collection step of the present invention, solid components precipitated after the effluent to be treated is accumulated in the membrane-immersed tank 16 for a fixed amount of time is drained along with liquid components of the effluent to be treated by a sludge drain and sludge transfer pump 27 and transferred to a sludge condensation tank 29 through a sludge drain pipe 25 (hereinafter, the solid-liquid dispersed system drained from the tank 16 is referred to as "crude sludge" in this embodiment). Specifically, with a sludge drain valve 26 opened, a sludge condensation tank supply valve 28 opened, a condensed sludge and supernatant water drain valve 40 closed, a condensed sludge drain valve 30 closed and a supernatant water transfer valve 41 closed, crude sludge is transferred by pump 27 through the sludge drain pipe 25 to the sludge condensation tank 29 being a separation means at a fixed rate. The content of solid components contained in crude sludge during transfer is larger than the content of solid components in the effluent to be treated at the time the effluent is introduced into the membrane-immersed tank 16.

The sludge condensation tank 29 is a vertically long tank, in other words a deep tank. The solid components comprising SS components, powdered activated carbon and the aggregating agent in crude sludge transferred to the tank 29 is left standing for a fixed amount of time, thereby being precipitated and densified. The crude sludge is consequently separated into a solid-liquid agglomerated system (hereinafter referred to as "condensed sludge") and a liquid layer (hereinafter referred to as "supernatant water"). The larger the deep per volume and the longer the standing time for separation, the higher is the efficiency of the separation in the sludge condensation tank, but the specific deep and standing time are set as appropriated according to the properties of solid components to be separated.

Condensed sludge densified through precipitation is transferred to a condensed sludge storage tank 32 by the sludge drain and sludge transfer pump 27, with the sludge drain valve 26 closed, the sludge condensation tank supply valve 28 closed, the condensed sludge and supernatant water drain valve 40 opened, the condensed sludge drain valve 30 opened and the supernatant water transfer valve 41 closed. Supernatant water remaining in the tank 29 after condensed sludge is removed is returned to the membrane-immersed tank 16 through a supernatant water transfer pipe 31 being a return means by the sludge drain and sludge transfer pump 27, with the sludge drain valve 26 closed, the sludge condensation tank supply valve 28 closed, the condensed sludge and supernatant water drain valve 40 opened, the condensed sludge drain valve 30 closed and the supernatant water transfer valve 41 opened.

The ceramic filtration membrane 17 is placed as a filtration membrane in the membrane-immersed tank 16. The membrane-immersed tank 16 and the ceramic filtration membrane 17 are referred to as purification means. The ceramic filtration membrane 17 is composed of ceramic sintered body. The filtration diameter is not specifically limited, and is generally 100 µm or smaller. A diameter of about 0.1 µm is particularly suitable for the treatment of a process effluent.

In this embodiment, as a purification step of the present invention, an effluent to be treated that has been retained in the membrane-immersed tank 16 for a fixed amount of time is passed through the ceramic filtration membrane 17 by a membrane filtration pump 21 with a membrane filtration valve 20 opened and a backwashing valve 38 closed, thereby filtering the effluent to be treated under reduced pressure. The filtered treatment effluent (hereinafter referred to as "purified liquid") is transferred to a treated effluent tank 22 through a treated effluent sodium hypochlorine supply line 36. Since the purified liquid does not contain SS components originating from a pre-process, soluble organic materials and heavy metals such as lead and cadmium, it can be, for example, reused as recycled water in a pre-production process, used in a different process or discharged to the outside of a factory. In addition, as a sodium hypochlorine adding step of the present invention, sodium hypochlorine may be added for the purpose of sterilizing the purified liquid. For the stage at which sodium hypochlorine is added, it is added when the purified liquid is contained in the treated effluent tank 22, or is passing through the treated effluent sodium hypochlorine supply line 36.

A backwashing water sodium hypochlorine supply line 39 described later is connected to the ceramic filtration membrane 17, and thus the purified liquid can also be transferred to the treated effluent tank 22 through this supply line 39.

Filtration by the ceramic filtration membrane 17 may be carried out at any time. Specifically, filtration may be carried out continuously all the time, or when the solid components of the effluent to be treated are being continuously precipitated on the bottom of the membrane-immersed tank 16, or after all the solid components are precipitated. The liquid in the membrane-immersed tank 16 may be mixed and stirred by a blower for aeration in a manner which does not cause clogging in a short time, filtration time may be set, or a filtration capacity, i.e. a water suction power and a suction pressure may be controlled as appropriate.

Furthermore, in this embodiment, the membrane filtration pump 21 is stopped at fixed time intervals, a backwashing pump 37 is operated with the membrane filtration valve 20 closed and the backwashing valve 38 opened, and the purified liquid in the treated effluent tank 22 is passed through the ceramic filtration membrane 17 for the purpose of cleaning off a clogging of the ceramic filtration membrane 17. At this time, for the purpose of improving the cleaning effect, sodium hypochlorine is supplied to the filtration membrane 17 at a fixed rate through the backwashing water sodium hypochlorine supply line 39.

In this embodiment, as a dehydration step and post-dehydration return step of the present invention, condensed sludge stored in the condensed sludge storage tank 32 is dehydrated by a filter press 33 and discharged to the outside of a system as dehydrated sludge 35, and on the other hand, a filtrate from the filter press 33 is transferred to the raw effluent tank 2 through a dehydrated filtrate transfer line 34. By carrying out the sludge condensation using the sludge condensation tank 29, the amount of liquid components discharged to the outside of the system as the solid components are discharged decreases, and consequently the amount of purified liquid increases. Thus, the effluent from a pre-process system can be treated without waste.

In this way, in this embodiment, solid components are collected from an impurity-containing liquid in a tank containing the impurity-containing liquid, the collected solid components are separated by a separation means from a small amount of liquid components accompanying the solid components, and the separated liquid components are returned to the tank, whereby the amount of liquid components discharged to the outside of a system along with the solid components when the solid components are removed from the impurity-containing liquid of the liquid components can be significantly reduced.

As shown in the embodiment described above and Example described below, in the present invention, the amount of liquid components accompanying solid components when the solid components are discharged from an impurity-containing liquid to the outside of a system can be reduced, and as a result, the amount of purified liquid obtained increases. For example, an effluent treatment process of a complicated process effluent from an industrial effluent can be reduced, the efficiency of the effluent treatment can be enhanced, and the effluent can be reused or discharged with stability by removing soluble heavy metals such as lead.

Furthermore, by applying the present invention, significant energy-saving and space-saving can be achieved compared to the conventional effluent treatment process, burdens on environments can be reduced, and in terms of the operation of an factory, for example, a reasonable effluent treatment apparatus and effluent treatment method can be provided.

Example of the present invention will be described below, although the present invention is not limited thereto.

### Example

An effluent treatment apparatus shown in FIG. 1 in which the effective volume of a membrane-immersed tank 16 is 15m³, the total membrane area of a ceramic filtration membrane 17 is 331.2 m², and the effective volume of a sludge condensation tank 29 is 1.59m³ was prepared. As a result of treating, by this apparatus a process effluent from a lens processing process as a raw effluent, having the following water quality:
pH: 7.3;
TOC (Total Organic Carbon): 34 ppm;
content of lead: 0.52 ppm;
content of copper: 0.30 ppm;
content of zinc: 0.68 ppm; and
content of iron: 0.30 ppm,
the amount of the effluent supplied to the membrane-immersed tank 16 was 297.6 m³/day,
the amount of filtered water from the ceramic filtration membrane 17 was 307.2 m³/day,
the amount of sludge drained from the membrane-immersed tank 16 to the sludge condensation tank 29 was 96 m³/day,
the amount of condensed sludge obtained by condensing post-precipitation condensed sludge and then filtering the same by a filter press 33 was 9.6 m³/day,
the amount of post-precipitation supernatant water returned to the membrane-immersed tank 16 was 86.4 m³/day, and
the amount of the treated effluent used for the backwashing of the ceramic filtration membrane 17 was 19.2 m³/day, and
stable operations could be maintained for 3 months or longer. The treatment efficiency in this Example is represented by a ratio of the final amount of the treated effluent 288 m³/day determined by subtracting the amount of the treated effluent used for the backwashing of the ceramic filtration membrane 17, i.e. 19.2 m³/day from the amount of filtered water from the ceramic filtration membrane 17, i.e. 307.2 m³/day to the amount of the effluent supplied to the membrane-immersed tank 16, i.e. 297.6 m³/day. As a result, a high level of efficiency of 96.8% was achieved in this Example.

The water quality of the obtained purified liquid is as follows:
pH: 7.6;
TOC: less than 1 ppm;
content of lead: less than 0.005 ppm;
content of copper: less than 0.01 ppm;
content of zinc: less than 0.012 ppm; and
content of iron: less than 0.1 ppm.
This treated effluent could be fully reused with stability as industrial water.

### Comparative Example

An effluent from the lens processing process, same as that treated in Example, was treated by a conventional lens processing process effluent treatment apparatus shown in FIG.3. The quality of the treated effluent is as follows:
pH: 7.8;
TOC: less than 1 ppm;
content of lead: less than 0.11 ppm;
content of copper: less than 0.01 ppm;
content of zinc: less than 0.056 ppm; and
content of iron: less than 0.1 ppm.

Thus, according to Example, water quality equivalent to or higher than that of the Comparative Example regarding conventional technique can be obtained. Particularly for soluble lead in small concentrations, the level of an treatment effect is more than 20 times as high as that of the Comparative Example.

## Claims

1. A liquid treatment method for removing impurities from an impurity-containing liquid, comprising:
a collection step of collecting a precipitated solid component from an impurity-containing liquid in a tank containing the liquid along with a liquid component of the liquid;
a separation step of separating the solid component collected in the collection step from the liquid component collected in the collection step;
a return step of returning to said tank the liquid component separated from the solid component in the separation step; and
a purification step of obtaining a purified liquid from the impurity-containing liquid contained in said tank.

2. The liquid treatment method according to claim 1, wherein the impurity-containing liquid is a liquid containing a aggregating agent and/or a pH adjustor.

3. The liquid treatment method according to claim 1, comprising a dehydration step of removing said liquid component from the solid component separated in the separation step, and a post-dehydration return step of returning to the purification step the liquid components obtained by the dehydration.

4. The liquid treatment method according to claim 1, wherein the purification step is a step of filtering the impurity-containing liquid to remove impurities therefrom.

5. The liquid treatment method according to claim 1, wherein said purification step comprises an aeration step of supplying air to the impurity-containing liquid to make the impurity-containing liquid contact the air.

6. The liquid treatment method according to claim 1, further comprising a step of introducing activated carbon into the said impurity-containing liquid to adsorb an organic material or metal on activated carbon and remove the adsorbed organic material or metal.

7. The liquid treatment method according to claim 1, comprising a step of adding sodium hypochlorine to said purified liquid.

8. A liquid treatment apparatus for removing impurities from an impurity-containing liquid, comprising:
a tank containing an impurity-containing liquid;
a collection means for collecting a solid component precipitated in the tank along with a liquid component of the impurity-containing liquid;
a separation means for separating the solid component collected by the collection means from the liquid components collected by the collection means;
a return means for returning to said tank the liquid component separated from the solid component by the separation means; and
a purification means for obtaining a purified liquid from the impurity-containing liquid contained in said tank.

9. The liquid treatment apparatus according to claim 8, wherein said tank has a cylindrical shape with a lower end comprising an inclined plane.

10. The liquid treatment apparatus according to claim 8, comprising a means for supplying air to the impurity-containing liquid to make the impurity-containing liquid contact the air.

11. The liquid treatment apparatus according to claim 8, comprising an activated carbon adding means for supplying into the impurity-containing liquid activated carbon for adsorbing an organic material or metal in the impurity-containing liquid on the activated carbon and removing the adsorbed organic material or metal.

12. The liquid treatment apparatus according to claim 8, comprising an aggregating agent adding means for adding an aggregating agent for aggreating a metal or a suspended material in said impurity-containing liquid.
